# FASCICULE DE BREVET EUROPEEN

(11) **EP 3 180 790 B1**
(45) Date de publication et mention de la délivrance du brevet: **11.07.2018**
(21) Numéro de dépôt: 15753656.6
(22) Date de dépôt: 10.08.2015
(51) Int. Cl.: G21F 5/012, G21F 5/12, G21C 19/07

(54) **PANIER POUR LE TRANSPORT ET/OU L'ENTREPOSAGE DE MATIERES RADIOACTIVES**
KORB ZUM TRANSPORT UND/ODER ZUR LAGERUNG VON RADIOAKTIVEN MATERIALIEN
BASKET FOR TRANSPORT AND/OR STORAGE OF RADIOACTIVE MATERIALS

(30) Priorité: 13.08.2014 FR 1457789
(43) Date de publication de la demande: 21.06.2017
(73) Titulaire: TN International, 78180 Montigny Le Bretonneux (FR)
(72) Inventeur: DELAGE, Olivier, 78340 Les Clayes-sous-Bois (FR); ROGER, Christophe, 93160 Noisy-le-Grand (FR)
(74) Mandataire: Brevalex
(86) Numéro de dépôt international: PCT/EP2015/068331
(87) Numéro de publication internationale: WO 2016/023849

(56) Documents cités:
- EP-A1- 2 112 665
- FR-A1- 2 961 942
- JP-A- 2004 163 120

## Description

### DOMAINE TECHNIQUE

L'invention se rapporte à un dispositif de rangement pour l'entreposage et/ou le transport de matières radioactives. Plus particulièrement, l'invention concerne un dispositif de rangement pour le transport et/ou l'entreposage d'assemblages de combustible nucléaire, de préférence irradiés.

### ÉTAT DE LA TECHNIQUE ANTÉRIEURE

De tels dispositifs de rangement, également appelés « paniers » ou « râteliers » de rangement, présentent une pluralité d'alvéoles à l'intérieur desquelles sont placés des assemblages de combustible nucléaire irradiés, en vue de leur transport et/ou de leur entreposage. Les assemblages de combustible sont notamment amenés à être déplacés depuis la centrale nucléaire, dès la fin de leur utilisation en tant que source d'énergie, jusqu'à leur site d'entreposage ou de traitement.

Ce type de panier est soumis à des températures élevées. Or, comme les caractéristiques mécaniques des éléments structurels constituant le panier se dégradent avec la température, il est nécessaire d'évacuer le flux de chaleur produit par les assemblages irradiés contenus dans le panier vers l'extérieur, afin de limiter l'élévation de température dans le panier et ainsi s'assurer que sa tenue mécanique soit compatible avec les épreuves dites de chute libre sur cible indéformable.

Dans de tels paniers, des cloisons périphériques sont fixées à des cloisons internes par des vis de serrage s'étendant en majorité selon la direction longitudinale des cloisons internes. Les cloisons internes sont alors en contact thermique des cloisons périphériques essentiellement sur le chant des cloisons internes.

Il est utile d'augmenter la surface de contact thermique entre les cloisons internes et les cloisons périphériques, afin d'améliorer l'évacuation de la chaleur hors du panier.

Un tel panier de rangement est connu du document JP 2004 163120 A.

### EXPOSÉ DE L'INVENTION

L'invention vise à résoudre au moins partiellement les problèmes rencontrés dans les solutions de l'art antérieur.

A cet égard, l'invention a pour objet un panier pour emballage de transport et/ou d'entreposage de matières radioactives telles que des assemblages de combustible nucléaire. Le panier comprend au moins une cloison interne et au moins une cloison périphérique. La cloison périphérique est située latéralement en périphérie de la cloison interne. La cloison interne comprend au moins une paroi présentant deux surfaces latérales opposées.

La cloison interne délimite au moins partiellement de part et d'autre de celle-ci deux alvéoles destinées à loger les matières radioactives, la cloison périphérique participant avec la cloison interne à la délimitation des alvéoles.

La cloison périphérique comprend au moins un logement recevant une extrémité de l'au moins une paroi, le logement comprenant deux surfaces latérales de logement opposées et un fond réunissant les deux surfaces latérales de logement.

Selon l'invention, le panier comprend un moyen de serrage configuré pour plaquer au moins l'une des surfaces latérales de paroi contre au moins l'une des surfaces latérales de logement.

Le contact latéral de l'au moins une paroi de cloison interne avec au moins une des surfaces latérale de son logement confère une augmentation de la surface de contact thermique entre la cloison interne et la cloison périphérique à laquelle la cloison interne est fixée.

Il en découle une meilleure évacuation de chaleur hors du panier et donc une diminution des températures au sein des éléments structurels le constituant. La tenue mécanique du panier est ainsi favorisée par cette évacuation de chaleur améliorée.

Lorsque le chant de paroi est également en contact thermique et mécanique du fond du logement, l'évacuation de chaleur hors du panier est davantage accrue.

L'invention peut comporter de manière facultative une ou plusieurs des caractéristiques suivantes combinées entre elles ou non.

Selon le type de matière radioactive, la cloison interne peut comprendre deux parois parallèles séparées par un espacement, chacune des parois présentant une surface latérale externe et une surface latérale interne, au moins une des surfaces latérales internes/externes étant configurée pour être plaquée contre une des surfaces latérales de logement par le moyen de serrage.

Lorsque l'extrémité de cloison interne comprend deux parois reçues dans deux logements distincts et séparés, il est préférable que chacune des surfaces latérales de paroi soit au contact thermique et mécanique d'une des surfaces latérales de logement opposées.

Avantageusement, le moyen de serrage génère un effort de pincement de l'extrémité de paroi de cloison interne entre ladite surface latérale de logement contre laquelle la paroi est plaquée, dite première surface de pincement, et une deuxième surface de pincement en regard de la première surface de pincement.

Les échanges thermiques entre la cloison interne et la cloison périphérique sont accrus lorsque la cloison interne est pincée.

Selon une particularité de réalisation, l'extrémité de l'au moins une paroi est pincée dans le logement, en étant au contact mécanique des deux surfaces latérales de logement.

Selon une forme de réalisation avantageuse, la cloison périphérique comprend une surface intérieure orientée vers l'intérieur du panier et participant à la délimitation des alvéoles, le logement débouchant au niveau de la surface intérieure, de sorte qu'au moins une des surfaces latérales de logement soit orthogonale à la surface intérieure.

De préférence, un rapport de valeur d'une épaisseur d'au moins une paroi sur une longueur de surface de contact de surface latérale de paroi avec une des surfaces latérales de logement, dans un plan de coupe transversal du panier, est compris entre 0,2 et 1. Un rapport égal à 1 reste avantageux lorsque les deux surfaces latérales de paroi sont au contact des surfaces latérales de logement.

Selon une autre forme de réalisation avantageuse, la cloison interne est au contact mécanique de la cloison périphérique sur au moins % de la hauteur de la cloison périphérique, de préférence sur sensiblement toute la hauteur du panier.

Selon une autre particularité de réalisation, le panier comprend une pluralité de cloisons internes formées d'éléments structurels empilés et entrecroisés.

Le moyen de serrage comprend de préférence une pluralité d'éléments de serrage espacés les uns des autres le long de la hauteur du panier. Les éléments de serrage sont de préférence configurés pour exercer chacun une force de serrage dont la valeur est indépendante de celle des autres éléments de serrage.

La pluralité d'éléments de serrage espacés le long de la hauteur facilite notamment un contact mécanique et thermique de la cloison périphérique avec une cloison interne réalisée en une seule pièce qui s'étend sensiblement sur toute la hauteur du panier.

Par ailleurs, une pluralité d'éléments de serrage espacés les uns des autres le long de la hauteur du panier est également intéressante, lorsque les cloisons internes sont formées d'éléments structurels empilés et entrecroisés. En effet, les éléments de serrage permettent alors de reprendre d'autant plus aisément d'éventuelles dilatations différentielles et d'éventuelles tolérances de fabrication et de montage des éléments structurels empilés et entrecroisés.

Avantageusement, le moyen de serrage est configuré pour être serré/desserré depuis l'extérieur du panier. Les opérations de montage/démontage du panier sont notamment facilitées.

Selon une forme de réalisation particulière, le moyen de serrage comprend une vis et un écrou configuré pour coopérer avec la vis. Le moyen de serrage est alors de structure simple et peut également servir à fixer la cloison interne à la cloison périphérique.

Selon une forme de réalisation avantageuse, le moyen de serrage comprend au moins un mors, le mors étant sollicité en écartement par l'écrou pour plaquer au moins l'une des surfaces latérales de paroi contre au moins l'une des surfaces latérales de logement.

Le moyen de serrage comprend de préférence au moins une première surface inclinée, la cloison périphérique ou l'extrémité de paroi comprenant au moins une deuxième surface inclinée complémentaire de la première surface inclinée et configurée pour être en appui sur la première surface inclinée. L'augmentation de la surface de serrage facilite le plaquage latéral de la paroi dans son logement.

Selon une forme de réalisation avantageuse, le moyen de serrage comprend au moins un élément de serrage élastique situé dans l'espacement défini ci-dessus, l'élément de serrage élastique tendant à plaquer au moins l'une des surfaces latérales externes contre l'une des surfaces latérales de logement.

L'invention porte également sur un colis de transport et/ou d'entreposage de matières radioactives telles que des assemblages de combustible nucléaire, le colis comprenant un emballage et un couvercle fermant l'emballage, l'emballage logeant un panier tel que défini ci-dessus.

L'invention se rapporte aussi à un procédé d'assemblage d'un panier tel que défini ci-dessus, comprenant, après une étape préalable de réception de l'extrémité de paroi dans son logement, une étape de plaquage d'au moins l'une des surfaces latérales de paroi contre l'une des surfaces latérales de logement, de sorte que la paroi soit située entre le moyen de serrage et la surface latérale de logement contre laquelle est plaquée la surface latérale de paroi.

### BRÈVE DESCRIPTION DES DESSINS

La présente invention sera mieux comprise à la lecture de la description d'exemples de réalisation, donnés à titre purement indicatif et nullement limitatif, en faisant référence aux dessins annexés sur lesquels :
- la figure 1 est une représentation schématique partielle éclatée d'un panier pour le transport/ l'entreposage de matières radioactives, selon un premier mode de réalisation préféré de l'invention (moyen de serrage non représenté) ;
- la figure 2 est une représentation schématique partielle éclatée d'un panier pour le transport/ l'entreposage de matières radioactives, selon un deuxième mode de réalisation préféré de l'invention (moyen de serrage non représenté);
- la figure 3 est une vue schématique partielle en coupe transversale du panier selon le premier ou le deuxième mode de réalisation, montrant le serrage d'une cloison interne dans un logement de cloison périphérique ;
- la figure 4 est une représentation schématique partielle en perspective de la cloison périphérique de la figure 3 ;
- la figure 5 est une représentation schématique partielle d'une variante de réalisation de la figure 3, montrant le serrage d'une cloison interne dans un logement de cloison périphérique ;
- la figure 6 est une représentation schématique partielle d'une autre variante de réalisation de la figure 3, montrant le serrage d'une cloison interne dans un logement de cloison périphérique ;
- la figure 7 est une représentation schématique partielle d'une variante de réalisation de la figure 5, montrant le serrage d'une cloison interne dans un logement de cloison périphérique ;
- la figure 8 est une représentation schématique partielle d'une autre variante de réalisation supplémentaire de la figure 3, montrant le serrage d'une cloison interne dans un logement de cloison périphérique.

### EXPOSÉ DÉTAILLÉ DE MODES DE RÉALISATION PARTICULIERS

Des parties identiques, similaires ou équivalentes des différentes figures portent les mêmes références numériques de façon à faciliter le passage d'une figure à l'autre.

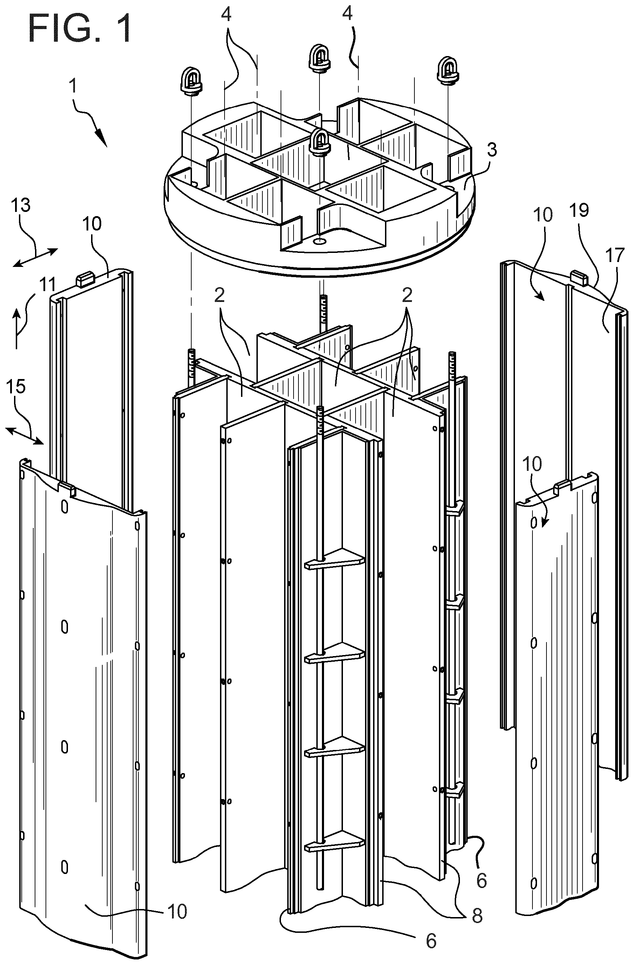

La figure 1 représente un dispositif de rangement 1 d'assemblages de combustible nucléaire irradiés dans un emballage (non représenté) pour le transport et/ou l'entreposage des assemblages de combustible. Le dispositif de rangement 1 est appelé panier dans la suite de la description. Le panier 1 comporte une plaque de tête 3 et un fond (non représenté).

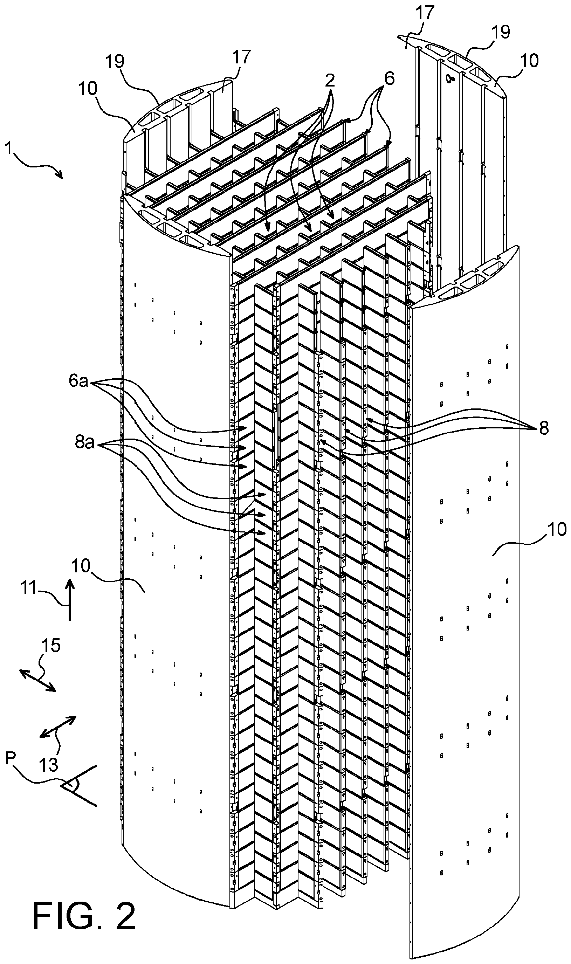

En référence aux figures 1 et 2, le panier 1 comprend une pluralité d'alvéoles adjacentes 2, ces dernières s'étendant chacun selon un axe longitudinal 4 du panier. Les alvéoles 2 sont de section carrée. Elles sont aptes à recevoir chacune un assemblage de combustible de section carrée. Néanmoins, les assemblages combustibles et/ou les alvéoles 2 peuvent également adopter d'autres formes, telles qu'une forme hexagonale.

Les alvéoles 2 sont prévues de manière à être juxtaposées les unes aux autres. Elles sont réalisées par l'intermédiaire d'une pluralité de cloisons 6, 8 et 10. Les cloisons 6, 8 et 10 sont réparties en trois jeux de cloisons distincts, définis respectivement par un premier jeu de cloisons internes 6, un deuxième jeu de cloisons internes 8, ainsi qu'un jeu de cloisons périphériques 10 situées radialement en périphérie des cloisons internes 6 et 8 par rapport à l'axe longitudinal 4 du panier.

Les cloisons 6, 8, 10 sont communes à plusieurs alvéoles 2. A ce titre, il est noté que les cloisons internes 6, 8 participent généralement à la délimitation de plusieurs alvéoles 2 situées de part et d'autre de la cloison interne 6, 8 concernée. Les cloisons 6, 8 comprennent une ou plusieurs parois 80, 82, 84 destinées à séparer les alvéoles 2. Ces parois 80, 82, 84 prennent grossièrement la forme d'une plaque.

Les cloisons internes 6, 8 sont assemblées entre elles de façon à être disposées parallèlement et perpendiculairement les unes par rapport aux autres, afin de former des alvéoles 2 de section carrée. Les premières cloisons internes 6 sont disposées parallèlement les unes aux autres, au même titre que les deuxièmes cloisons internes 8 entre elles. De plus, les premières cloisons internes 6 sont assemblées de manière à être sensiblement perpendiculaires aux deuxièmes cloisons internes 8. Les cloisons périphériques 10 sont fixées aux cloisons internes 6, 8, de sorte à fermer les alvéoles 2 en périphérie du panier 1.

En d'autres termes, les cloisons internes 6, 8 constituent au moins trois des quatre faces latérales planes délimitant une alvéole 2. Les surfaces intérieures 17 de cloisons périphériques 10 forment chacune éventuellement une des quatre faces latérales planes délimitant une alvéole 2.

Ces surfaces intérieures 17 sont orientées vers l'intérieur du panier 1, par opposition aux surfaces extérieures 19 des cloisons périphériques 10 qui sont situées en périphérie du panier 1 et qui délimitent l'extérieur du panier 1. Les surfaces extérieures 19 sont de préférence des arcs de cercles, de sorte à faciliter l'insertion/le retrait du panier 1 dans la cavité circulaire d'un emballage (non représenté).

En référence plus spécifiquement au premier mode de réalisation, les cloisons internes 6 et 8 sont réalisées d'une seule pièce, de sorte à s'étendre chacune sur toute la longueur du/des alvéoles 2 qu'elles définissent. De manière similaire, les cloisons périphériques 10 sont réalisées d'une seule pièce, de sorte à s'étendre chacune sur toute la longueur des alvéoles 2 qu'elles définissent.

En référence spécifiquement à la figure 2, les alvéoles 2 sont réalisées par l'intermédiaire d'une pluralité d'ensembles structurels 6a, 8a à encoches empilés selon une direction d'empilement 11 parallèle à l'axe longitudinal 4 du panier. La direction d'empilement 11 s'étend à partir d'un fond de dispositif de rangement vers une plaque de tête de panier. On appelle aussi hauteur du panier la direction d'empilement 11.

L'empilement d'ensembles structurels 6a, parallèles selon une première direction 13, forme une première cloison interne 6. L'empilement d'ensembles structurels 8a, parallèles selon une deuxième direction 15, forme une deuxième cloison interne 8.

Les directions 11, 13 et 15 sont orthogonales deux à deux. Les ensembles structurels à encoches 6a, 8a sont donc entrecroisés de manière perpendiculaire.

Les ensembles structurels 6a, 8a s'étendent entre au moins deux cloisons périphériques 10 opposées auxquelles ils sont fixés. Dans le deuxième mode de réalisation, les cloisons périphériques 10 sont réalisées d'une seule pièce. En variante, il est tout à fait envisageable de prévoir que chaque cloison périphérique 10 soit réalisée par l'intermédiaire d'une pluralité d'ensembles structurels empilés.

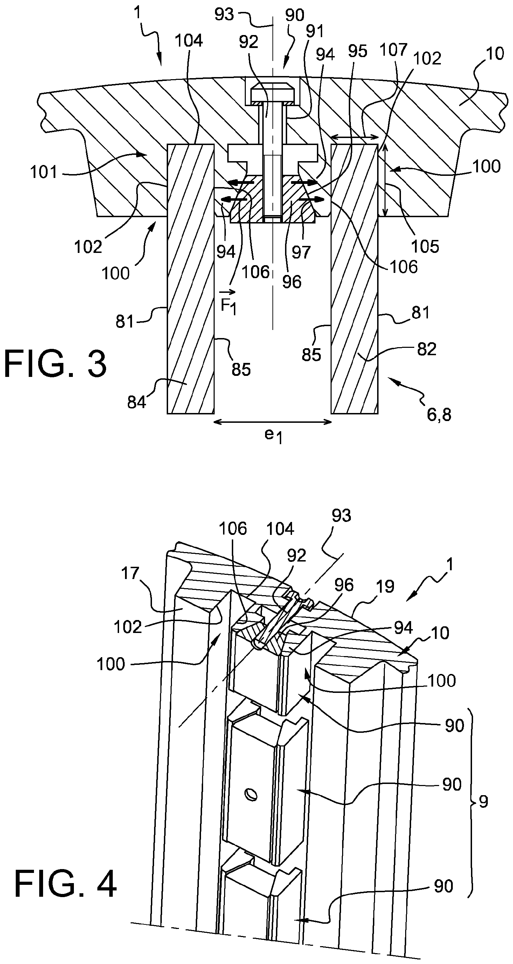

Les figures 3 et 4 représentent le serrage d'une des cloisons internes 6, 8 dans un logement d'une cloison périphérique 10 d'un panier 1, selon le premier ou le deuxième mode de réalisation.

La cloison interne 6, 8 comprend deux parois parallèles 82, 84 séparées par un espacement. Les parois 82, 84 sont de préférence identiques. Chacune des parois 82, 84 présente une surface latérale externe 81 et une surface latérale interne 85, de sorte que la surface latérale externe 81 et la surface latérale interne 85 soient de part et d'autre de la paroi 82, 84. L'espacement e₁ est maintenu constant, par exemple au moyen d'entretoises (non représentées) en appui sur les surfaces latérales internes 85, à l'intérieur de l'espacement e₁.

L'extrémité de la cloison interne 6, 8 est logée dans un évidement 101 qui est réalisé dans la cloison périphérique 10 et qui comprend deux logements 100 pour loger les parois 82, 84.

L'extrémité de chacune des parois parallèles 82, 84 de la cloison interne 6, 8 est reçue dans un des logements 100 de la cloison périphérique 10. Ces logements 100 comprennent chacun deux surfaces latérales opposées et parallèles 102, 106. Les surfaces latérales 102, 106 de logement sont réunies par un fond 104. Les logements 100 débouchent au niveau d'une surface intérieure 17 de la cloison périphérique 10, de sorte que les surfaces latérales 102, 106 de logement soient orthogonales à la surface intérieure 17. La surface intérieure 17 et la cloison interne 6, 8 délimitent deux alvéoles 2 contigües, de part et d'autre de la cloison interne 6, 8.

La surface latérale externe 81 de chacune des parois 82, 84 est plaquée contre une des surfaces latérales 102, 106 de logement par un moyen de serrage 9. Les surfaces latérales externes 81 ont une forme complémentaires des surfaces latérales de logement 102, 106, de sorte à favoriser le contact thermique des cloisons internes 6, 8 avec les cloisons périphériques 10. Dans le mode de réalisation de la figure 3, les surfaces latérales de logement 102, 106 d'une extrémité de cloison interne 6, 8 sont deux à deux parallèles.

En référence plus spécifiquement à la figure 4, le moyen de serrage 9 comprend une pluralité d'éléments de serrage 90 espacés les uns des autres le long de la hauteur du panier 1. Chaque moyen de serrage 90 comprend une vis 92 et un écrou 96 coopérant avec la vis 92. Les vis sont logées dans des trous 91 de la cloison périphérique 10, traversant la surface extérieure 19. De cette façon, les éléments de serrage 90 peuvent être serrées/desserrées depuis l'extérieur du panier 1, en agissant sur les têtes de vis 92. L'écrou 96 est situé entre deux mors 94, de manière à ce que les mors 94 soient sollicités en écartement par l'écrou 96 et la vis 92 pour plaquer les surfaces latérales 81 de paroi contre les surfaces latérales 102 de logement.

Plus précisément, l'écrou 96 présente deux premières surfaces inclinées 97 et la cloison périphérique 10 comprend, au niveau de chaque mors 94, deux deuxièmes surfaces inclinées 95 de forme complémentaire des première surfaces inclinées 97. Les premières surfaces et deuxième surfaces inclinées 95, 97 sont destinées à être en appui l'une sur l'autre, de sorte à maximiser la surface de contact mécanique entre elles et favoriser le serrage latéral des parois 82, 84 de cloison interne 6, 8 dans leur logement 100.

Les éléments de serrage 90 peuvent exercer chacun une force de serrage latéral Fi dont la valeur est indépendante de celle des autres éléments de serrage 90, en fonction de la tension exercée sur la vis 92 et l'écrou 96. Les éléments de serrage 90 permettent alors de reprendre d'autant plus aisément les éventuelles dilatations différentielles et les éventuelles tolérances de fabrication et de montage des cloisons internes 6, 8 et/ou des cloisons périphériques 10.

A cet effet, des éléments de serrage indépendants 90 et espacés les uns des autres le long de la hauteur du panier 1 permettent notamment un contact mécanique et thermique de la cloison interne 6, 8 et de la cloison périphérique 10 sur sensiblement toute la hauteur du panier 1, c'est-à-dire par exemple au moins % de la hauteur de la cloison périphérique 10.

Dans le mode de réalisation des figures 3 et 4, les mors 94 sont formés d'une seule pièce, notamment par extrusion, avec la cloison périphérique 10. Les parois 82, 84 de cloison interne sont donc en contact thermique de la paroi périphérique 10, au moins au niveau des deux surfaces latérales 102, 106 opposées du logement. Les parois 82, 84 sont de ce fait pincées dans leur logement 100. La première surface latérale 102 du logement 100 forme alors une première surface de pincement de chaque paroi 82, 84 et la deuxième surface latérale 106 du logement 100 forme une deuxième surface de pincement de cette paroi 82, 84.

La cloison interne 6, 8 et les éléments de serrage 90 sont sensiblement symétriques par symétrie plane de plan parallèle aux parois 82, 84 et passant par l'axe 93.

De plus, les premières surfaces inclinées 97 sont inclinées vers la surface extérieure 19. Les parois 82, 84 sont au contact chacune du fond 104 de leur logement respectif 100. Les éléments de serrage 90 du mode de réalisation des figures 3 et 4 sont les seuls moyens de fixation de la cloison interne 6, 8 à la cloison périphérique 10.

En variante, chaque mors 94 pourrait être formé d'une seule pièce avec une des parois 82, 84 de parois ou fixé à une des parois 82, 84, de sorte à être en saillie du reste de la surface latérale interne 85 de paroi. Ces variantes de réalisations présentent éventuellement l'avantage de permettre un usinage plus aisé des mors 94.

Par ailleurs, la cloison interne 6, 8 fixée à la paroi périphérique 10 et/ou les éléments de serrage 90 pourraient également ne présenter aucune symétrie plane.

En variante encore, les premières surfaces inclinées 97 pourraient bien entendu être d'inclinaisons opposées, c'est-à-dire se rapprocher l'une de l'autre en direction de la surface intérieure 17.

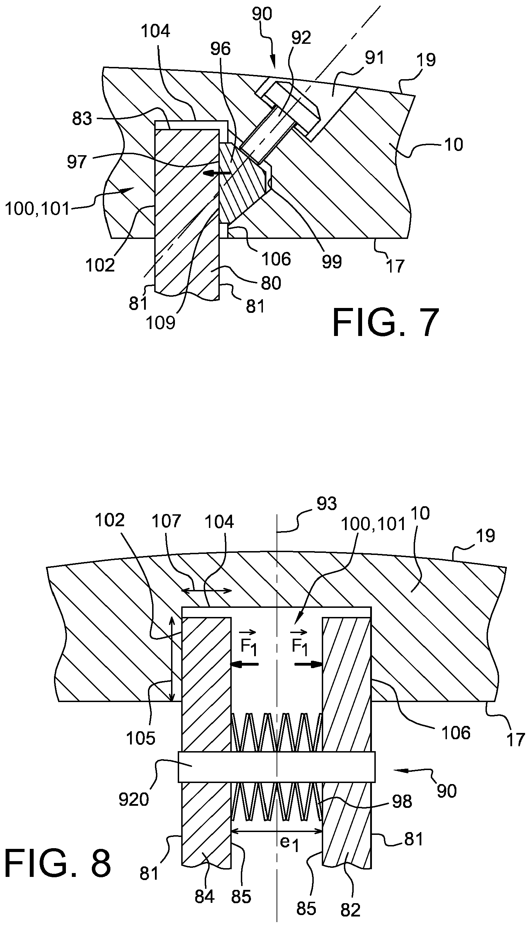

A titre d'alternative, il peut tout à fait exister un jeu entre le chant de chacune des parois 82, 84 et le fond 104 du logement, permettant notamment de compenser des éventuelles dilatations différentielles du panier 1 et/ou d'éventuels chocs subis par le panier 1 selon la direction 93. Néanmoins, le seul contact thermique des surfaces latérales externes 81 avec les surfaces 102 de logement et éventuellement le contact thermique des surfaces latérales internes 85 avec les surfaces latérales 106 de logement suffit généralement à permettre des échanges thermiques satisfaisants des cloisons internes 6, 8 avec les cloisons périphériques 10. A cet égard, il suffit généralement que le rapport de valeur de l'épaisseur 107 de chacune des parois 82, 84 sur la longueur de surface 105 de contact de sa surface latérale externe 81 avec l'une des surfaces latérales 102, 106 de logement, dans le plan de coupe transversal du panier 1 représenté à la figure 3 ou à la figure 8 et par exemple le plan transversal P de la figure 2, soit compris entre 0,2 et 1.

A titre d'alternative encore, le panier 1 peut comprendre des moyens de fixation (non représentés) des cloisons internes 6, 8 aux cloisons périphériques 10, le moyen de serrage 9 servant uniquement à plaquer la ou les parois 80, 82, 84 contre au moins l'une des surfaces latérales 102, 106 de logement, une fois que la cloison interne 6, 8 est au moins partiellement fixée à la cloison périphérique 10.

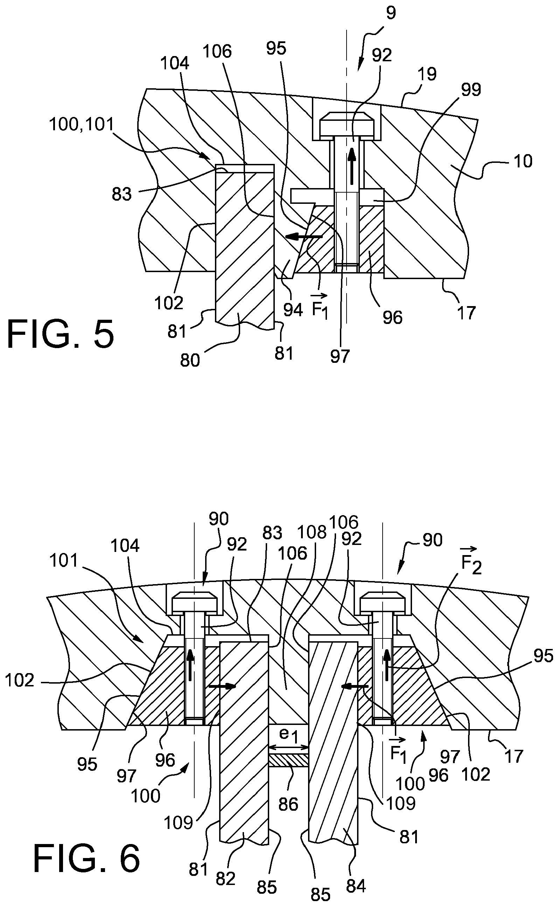

La figure 5 représente une variante de réalisation des figures 3 et 4, dans laquelle la cloison interne 6, 8 comprend une paroi unique 80. Cette paroi unique 80 comprend deux surfaces latérales externes opposées 81 et un chant 83 réunissant ces deux surfaces latérales. L'évidement 101 logeant l'extrémité de la cloison interne 6, 8 comprend un unique logement 100 logeant l'extrémité de la paroi unique 80. Le chant 83 se situe à distance du fond 104 du logement 100.

Les surfaces latérales externes 81 de cloison interne 6, 8 sont plaquées contre les surfaces latérales 102, 106 du logement par un élément de serrage 9 comprenant un mors 94 unique. Le mors 94 est par exemple formé d'une seule pièce par extrusion avec la cloison périphérique 10. Ce mors 94 est serré latéralement contre la paroi 80 par une vis 92 coopérant avec un écrou 96 reçu dans un logement 99 d'écrou. Le logement 99 d'écrou débouche sur la surface intérieure 17, de sorte à être localement orthogonal à la surface intérieure 17.

La variante de réalisation de la figure 6 se distingue de celle des figures 3 et 4 en ce qu'elle comprend deux éléments de serrage 90 dans un plan de coupe transversale du panier 1. Par ailleurs, les éléments de serrage 90 sont reçus au moins partiellement dans les logements 100, et les éléments de serrage 90 sont dépourvus de mors 94. L'évidement 101 recevant l'extrémité de la cloison interne 6, 8 comprend deux logements 100 séparés l'un de l'autre par une paroi intermédiaire 108 de la cloison périphérique 10. Chacune des parois 82, 84 est pincée entre une première surface de pincement formée par une paroi latérale de logement 106 et une deuxième surface de pincement 109 formée par la surface de contact de l'écrou 96 avec la paroi 82, 84 qu'il serre.

Les éléments de serrage 90 comprennent chacun une vis 92 et un écrou coopérant avec la vis 92. Les trous 91 de vis débouchent dans les logements 100 au niveau des fonds 104 de logement. Les écrous 96 sont situés dans les logements 100, en venant en appui de la surface externe 81 de paroi 82, 84 le long de la deuxième surface de pincement 109. Les écrous 96 portent les premières surfaces inclinées 97 et les deuxièmes surfaces inclinées 95 forment les premières surfaces latérales 102 de logement. Les deuxièmes surfaces inclinées 95 sont découpées directement dans la cloison périphérique 10, de sorte à déboucher au niveau de la surface intérieure 17 en formant un angle différent de 90° avec la surface intérieure 17.

De manière similaire au mode de réalisation des figures 3 et 4, les vis 92 sont serrées avec une force de serrage F₂ orientée dans la direction longitudinale de la cloison interne 6, 8, c'est-à-dire dans la première direction 13 ou la deuxième direction 15. Les écrous 96 exercent alors directement une force de serrage latéral Fi sur les surfaces latérales externes 81 de paroi 82, 84, de sorte à plaquer les surfaces latérales internes 85 de paroi 82, 84 contre les deuxièmes surfaces latérales 106 de logement.

L'espacement e₁ entre les parois 82, 84 de cloisons internes est maintenu constant par une entretoise transversale 86 en appui sur les surfaces latérales internes 85 de paroi 82, 84 et par la portion de cloison périphérique 10 située entre les deux logements 100 contigus.

La variante de réalisation de la figure 7 diffère du mode de réalisation de la figure 5 en ce que l'élément de serrage 90 est au moins partiellement dans le logement 100, et en ce que l'élément de serrage 90 ne comprend ni écrou ni mors. L'évidement 101 comprend un seul logement 100 qui loge partiellement le poussoir 96, la paroi 80 étant pincée entre une première surface de pincement formée par la première surface latérale 102 de logement et une deuxième surface de pincement 109 qui est la surface de contact du poussoir 96 avec la paroi 80.

La paroi 80 comprend deux surfaces latérales externes 81 opposées et réunies par un chant 83. L'élément de serrage 90 comporte une vis 92 dont la tête est accessible depuis l'extérieur du panier 1, et un poussoir 96 destiné à plaquer une des surfaces latérales externes 81 contre la première surface latérale 102 de logement. Du fait du poussoir 96, l'autre surface latérale externe 81 de paroi n'est pas en contact mécanique et thermique de la deuxième surface latérale de logement 106. La vis 92 est en appui sur le poussoir 96 qui est situé au moins partiellement dans un renfoncement 99 de la cloison périphérique 10, débouchant dans le logement 100. Le chant 83 de paroi se situe à distance du fond 104 du logement.

La figure 8 représente une autre variante de l'invention qui se distingue du mode de réalisation des figures 3 et 4 en ce que les éléments de serrage 90 ne comportent pas de vis, pas d'écrou et pas de mors. Par ailleurs, les éléments de serrage 90 sont situés à distance de la cloison périphérique 10. Enfin, les deux parois 82, 84 de cloison interne 6, 8 sont reçues dans un logement 100 unique. Ce logement unique 100 forme l'évidement 101, les deux surfaces latérales externes 81 des parois 82, 84 étant plaquées respectivement contre la première surface latérale de logement 102 et la deuxième surface latérale de logement 106.

L'extrémité de cloison interne 6, 8 et l'élément de serrage 90 sont symétriques par symétrie plane passant par l'axe 93. L'élément de serrage 90 représenté à cette figure comprend un élément de serrage élastique 98 et un élément de contrainte 920 de l'élément de serrage élastique 98, l'élément de contrainte 920 permettant également de maintenir l'élément de serrage 98 entre les surfaces latérales internes 85.

L'élément de serrage élastique 98 prend par exemple la forme d'un ensemble de rondelles élastiques bombées en acier à ressort. L'ensemble de rondelles est situé dans l'espacement e₁ et prend appui sur les surfaces latérales internes 81 qu'il sollicite en écartement l'une de l'autre. Les surfaces latérales externes 81 de paroi 82, 84 sont alors plaquées contre les surfaces latérales 102, 106 de logement, avec une force latérale Fi.

L'élément de contrainte 920 est destiné à comprimer l'élément de serrage élastique 98, de sorte à permettre son insertion entre les surfaces latérales internes 81 de paroi. Par ailleurs, l'élément de contrainte 920 peut également servir à solliciter l'élément de serrage élastique 98 en écartement, de façon à ce que l'élément de serrage élastique 98 éloigne suffisamment les surfaces latérales internes 85 l'une de l'autre pour plaquer les surfaces latérales externes 81 contre les surfaces latérales 102, 106 de logement.

Le panier 1 est assemblé selon le procédé décrit ci-dessous. Les cloisons internes 6, 8 sont au préalable fixées les unes aux autres de manière à former les alvéoles centrales 2 du panier. Par la suite, les cloisons périphériques 10 sont assemblées aux cloisons internes 6, 8, de sorte à fermer latéralement les alvéoles périphériques 2 du panier 1. Les extrémités des cloisons internes 6, 8 sont logées chacune dans leur évidement 101 respectif, en plaquant au moins l'une des surfaces latérales de paroi 81, 85 de la cloison interne contre au moins l'une des surfaces de logement 102, 106 de l'évidement.

Un fond et une plaque de tête 3 contribuent à maintenir l'ensemble des cloisons du panier 1, de part et d'autre de la hauteur 11 du panier, la plaque de tête permettant également la manutention du panier.

Le procédé d'assemblage de la cloison interne 6, 8 avec la cloison périphérique 10 est maintenant décrit plus en détail en référence aux figures 3 à 8.

Les deux extrémités opposées des parois 80, 82, 84 de cloisons internes 6, 8 sont tout d'abord reçues dans leurs logements 100 respectifs. Le moyen de serrage 9 situé à une des extrémités plaque alors au moins l'une des surfaces latérales 81, 85 de paroi 80, 82, 84 contre au moins l'une des surfaces latérales 102, 106 de logement. La paroi 80, 82, 84 est alors située entre cette surface latérale 102, 106 de logement et le moyen de serrage 9.

Lorsque la cloison interne 6, 8 comprend deux parois 82, 84, ces deux parois 82, 84 sont de préférence d'abord reçues toutes les deux dans leur logement 100, avant que le moyen de serrage 9 les plaque contre au moins une des surfaces latérales 102, 106 de logement.

De plus, les cloisons internes 6, 8 peuvent être au moins partiellement fixées aux cloisons périphériques 10, avant que le moyen de serrage 9 assure le plaquage d'au moins une des surfaces latérales 81, 85 de l'au moins une paroi 80, 82, 84 contre la surface latérale de logement 102, 106 correspondante.

Les parois 80, 82, 84 peuvent éventuellement coulisser le long de la direction d'élongation des cloisons internes 6, 8, c'est-à-dire le long de la première direction 13 ou le long de la deuxième direction 15, après leur serrage contre au moins l'une des surfaces latérales de logement 102, 106 par le moyen de serrage 9. Ce coulissement permet par exemple de mieux compenser d'éventuelles dilatations différentielles du panier 1 et/ou de reprendre des chocs subis par le panier 1.

Bien entendu, diverses modifications peuvent être apportées par l'homme du métier à l'invention qui vient d'être décrite sans sortir du cadre de l'exposé de l'invention. L'invention est définie dans les revendications.

## Revendications

1. Panier (1) pour emballage de transport et/ou d'entreposage de matières radioactives telles que des assemblages de combustible nucléaire, le panier (1) comprenant :
au moins une cloison interne (6, 8) comprenant au moins une paroi (80, 82, 84) présentant deux surfaces latérales opposées (81, 85), et
au moins une cloison périphérique (10),
la cloison interne (6, 8) délimite au moins partiellement de part et d'autre de celle-ci deux alvéoles (2) destinées à loger les matières radioactives, la cloison périphérique (10) participant avec la cloison interne (6, 8) à la délimitation des alvéoles (2),
la cloison périphérique (10) comprenant au moins un logement (100) recevant une extrémité de l'au moins une paroi (80, 82, 84), le logement (100) comprenant deux surfaces latérales (102, 106) de logement opposées et un fond (104) réunissant les deux surfaces latérales (102, 106) de logement,
**caractérisé en ce que** le panier (1) comprend un moyen de serrage (9) configuré pour plaquer au moins l'une des surfaces latérales (81, 85) de paroi contre au moins l'une des surfaces latérales (102, 106) de logement.

2. Panier (1) selon la revendication précédente, dans lequel la cloison interne (6, 8) comprend deux parois parallèles (82, 84) séparées par un espacement, chacune des parois (82, 84) présentant une surface latérale externe (81) et une surface latérale interne (85), au moins une des surfaces latérales externes (81) ou au moins une des surfaces latérales internes (85) étant configurée pour être plaquée contre une des surfaces latérales (102, 106) de logement par le moyen de serrage (9).

3. Panier (1) selon l'une quelconque des revendications précédentes, dans lequel le moyen de serrage (9) génère un effort de pincement de l'extrémité de paroi (80, 82, 84) de cloison interne (6, 8) entre :
ladite surface latérale (102, 106) de logement contre laquelle la paroi (80, 82, 84) est plaquée, dite première surface de pincement, et
une deuxième surface de pincement en regard de la première surface de pincement (102, 106),
l'extrémité de l'au moins une paroi (80, 82, 84) étant de préférence pincée dans le logement (100), en étant au contact mécanique des deux surfaces latérales (102, 106) de logement.

4. Panier (1) selon l'une quelconque des revendications précédentes, dans lequel la cloison périphérique (10) comprend une surface intérieure (17) orientée vers l'intérieur du panier (1) et participant à la délimitation des alvéoles (2), le logement (100) débouchant au niveau de la surface intérieure (17), de sorte qu'au moins une des surfaces latérales (102, 106) de logement soit orthogonale à la surface intérieure (17).

5. Panier (1) selon l'une quelconque des revendications précédentes, dans lequel un rapport de valeur d'une épaisseur (107) de l'au moins une paroi sur une longueur de surface (105) de contact de surface latérale de paroi avec une des surfaces latérales de logement, dans un plan de coupe transversal du panier (1), est compris entre 0,2 et 1.

6. Panier (1) selon l'une quelconque des revendications précédentes, dans lequel la cloison interne (6, 8) est au contact mécanique de la cloison périphérique (10) sur au moins % de la hauteur de la cloison périphérique (10), de préférence sur sensiblement toute la hauteur du panier (1).

7. Panier (1) selon l'une quelconque des revendications précédentes, comprenant une pluralité de cloisons internes (6, 8) formées d'ensembles structurels (6a, 8a) empilés et entrecroisés.

8. Panier (1) selon l'une quelconque des revendications précédentes, dans lequel le moyen de serrage (9) comprend une pluralité d'éléments de serrage (90) espacés les uns des autres le long de la hauteur du panier (1), et de préférence configurés pour exercer chacun une force de serrage (F₁) dont la valeur est indépendante de celle des autres éléments de serrage (90).

9. Panier (1) selon l'une quelconque des revendications précédentes, dans lequel le moyen de serrage (9) est configuré pour être serré/desserré depuis l'extérieur du panier (1).

10. Panier (1) selon l'une quelconque des revendications précédentes, dans lequel le moyen de serrage (9) comprend une vis (92) et un écrou (96) configuré pour coopérer avec la vis (92).

11. Panier (1) selon la revendication précédente, dans lequel le moyen de serrage (9) comprend au moins un mors (94), le mors (94) étant sollicité en écartement par l'écrou (96) pour plaquer au moins l'une des surfaces latérales (81) de paroi contre au moins l'une des surfaces latérales (102) de logement.

12. Panier (1) selon l'une quelconque des revendications précédentes, dans lequel le moyen de serrage (9) comprend au moins une première surface inclinée (97), la cloison périphérique (10) ou l'extrémité de paroi (80, 82, 84) comprenant au moins une deuxième surface inclinée (95) complémentaire de la première surface inclinée (97) et configurée pour être en appui sur la première surface inclinée (97).

13. Panier (1) selon l'une quelconque des revendications 2 à 8 en ce qu'elles dépendent de la revendication 2, dans lequel le moyen de serrage (9) comprend au moins un élément de serrage élastique (98) situé dans l'espacement, l'élément de serrage élastique (98) tendant à plaquer au moins l'une des surfaces latérales externes (81) contre l'une des surfaces latérales de logement (102, 106).

14. Colis de transport et/ou d'entreposage de matières radioactives telles que des assemblages de combustible nucléaire, comprenant un emballage et un couvercle fermant l'emballage, l'emballage logeant un panier (1) selon l'une quelconque des revendications précédentes.

15. Procédé d'assemblage d'un panier (1) selon l'une quelconque des revendications 1 à 12, comprenant, après une étape de réception de l'extrémité de la paroi (80, 82, 84) dans le logement (100), une étape de plaquage d'au moins l'une des surfaces latérales de paroi (81, 85) contre au moins l'une des surfaces latérales de logement (102, 106), de sorte que la paroi (80, 82, 84) soit située entre le moyen de serrage (9) et la surface latérale de logement (102, 106) contre laquelle est plaquée la surface latérale de paroi (81, 85).

## Patentansprüche

1. Behälter (1) zur Verpackung für den Transport oder/und die Zwischenlagerung von radioaktiven Materialien, beispielsweise nuklearen Brennelementen, wobei der Behälter (1) umfasst:
wenigstens eine interne Trennwand (6, 8), umfassend wenigstens eine Wandung (80, 82, 84), die zwei gegenüberliegende Seitenflächen (81, 85) aufweist, und
wenigstens eine periphere Trennwand (10),
wobei die interne Trennwand (6, 8) wenigstens teilweise auf der einen und der anderen Seite davon zwei Zellen (2) abgrenzt, die dazu bestimmt sind, die radioaktiven Materialien aufzunehmen, wobei die periphere Trennwand (10) mit der internen Trennwand (6, 8) an der Abgrenzung der Zellen (2) teilnimmt,
wobei die periphere Trennwand (10) wenigstens eine Aufnahme (100) umfasst, die ein Ende der wenigstens einen Wandung (80, 82, 84) aufnimmt, wobei die Aufnahme (100) zwei gegenüberliegende Aufnahme-Seitenflächen (102, 106) und einen Boden (104) umfasst, der die zwei Aufnahme-Seitenflächen (102, 106) vereinigt,
**dadurch gekennzeichnet, dass** der Behälter (1) ein Klemmmittel (9) umfasst, das dazu konfiguriert ist, wenigstens eine der Seitenflächen (81, 85) der Wandung gegen wenigstens eine der Aufnahme-Seitenflächen (102, 106) zu drücken.

2. Behälter (1) nach dem vorhergehenden Anspruch, wobei die interne Trennwand (6, 8) zwei parallele Wandungen (82, 84) umfasst, die durch einen Zwischenraum voneinander getrennt sind, wobei jede der Wandungen (82, 84) eine externe Seitenfläche (81) und eine interne Seitenfläche (85) aufweist, wobei wenigstens eine der externen Seitenflächen (81) oder wenigstens eine der internen Seitenflächen (85) dazu konfiguriert ist, durch das Klemmmittel (9) gegen eine der Aufnahme-Seitenflächen (102, 106) gedrückt zu werden.

3. Behälter (1) nach einem der vorhergehenden Ansprüche, wobei das Klemmmittel (9) einen Kraftaufwand zum Einklemmen des Endes der Wandung (80, 82, 84) der internen Trennwand (6, 8) erzeugt, zwischen: der als erste Klemmfläche bezeichneten Aufnahme-Seitenfläche (102, 106), gegen welche die Wandung (80, 82, 84) gedrückt wird, und einer zweiten Klemmfläche gegenüber der ersten Klemmfläche (102, 106), wobei das Ende der wenigstens einen Wandung (80, 82, 84) vorzugsweise in der Aufnahme (100) eingeklemmt ist, wobei sie in mechanischem Kontakt mit den zwei Aufnahme-Seitenflächen (102, 106) steht.

4. Behälter nach einem der vorhergehenden Ansprüche, wobei die periphere Trennwand (10) eine Innenfläche (17) umfasst, die zum Innenraum des Behälters (1) hin orientiert ist und an der Abgrenzung der Zellen (2) teilnimmt, wobei die Aufnahme (100) auf Höhe der Innenfläche (17) öffnet, so dass wenigstens eine der Aufnahme-Seitenflächen (102, 106) orthogonal zu der Innenfläche (17) ist.

5. Behälter (1) nach einem der vorhergehenden Ansprüche, wobei ein Wert-Verhältnis einer Dicke (107) der wenigstens einen Wandung zu einer Länge der Kontaktfläche (105) der Seitenfläche der Wandung mit einer der Aufnahme-Seitenflächen in einer transversalen Schnittebene des Behälters (1) zwischen 0,2 und 1 liegt.

6. Behälter nach einem der vorhergehenden Ansprüche, wobei die interne Trennwand (6, 8) in mechanischem Kontakt mit der peripheren Trennwand (10) über wenigstens ¾ der Höhe der peripheren Trennwand (10) steht, bevorzugt über im Wesentlichen die gesamte Höhe des Behälters (1).

7. Behälter (1) nach einem der vorhergehenden Ansprüche, umfassend eine Mehrzahl von internen Trennwänden (6, 8), die aus gestapelten und gekreuzten Baugruppen (6a, 8a) gebildet sind.

8. Behälter (1) nach einem der vorhergehenden Ansprüche, wobei das Klemmmittel (9) eine Mehrzahl von Klemmelementen (90) umfasst, die voneinander entlang der Höhe des Behälters (1) beabstandet sind, und die bevorzugt dazu konfiguriert sind, jeweils eine Klemmkraft (F₁) auszuüben, deren Wert unabhängig ist von derjenigen der anderen Klemmelemente (90).

9. Behälter (1) nach einem der vorhergehenden Ansprüche, wobei das Klemmmittel (9) dazu konfiguriert ist, um von außerhalb des Behälters (1) festgezogen/gelöst zu werden.

10. Behälter (1) nach einem der vorhergehenden Ansprüche, wobei das Klemmmittel (9) eine Schraube (92) und eine Mutter (96) umfasst, die dazu konfiguriert ist, mit der Schraube (92) zusammenzuwirken.

11. Behälter (1) nach dem vorhergehenden Anspruch, wobei das Klemmmittel (9) wenigstens eine Backe (94) umfasst, wobei die Backe (94) durch die Schraube (96) auf Abstand gedrängt wird, um wenigstens die eine der Seitenflächen (81) der Wandung gegen die wenigstens eine der Aufnahme-Seitenflächen (102) zu drücken.

12. Behälter (1) nach einem der vorhergehenden Ansprüche, wobei das Klemmmittel (9) wenigstens eine erste geneigte Fläche (97) umfasst, wobei die periphere Trennwand (10) oder das Ende der Wandung (80, 82, 84) wenigstens eine zweite geneigte Fläche (95) umfasst, die komplementär zu der ersten geneigten Fläche (97) und dazu konfiguriert ist, an der ersten geneigten Fläche (97) anzuliegen.

13. Behälter (1) nach einem der Ansprüche 2 bis 8, insoweit diese von Anspruch 2 abhängen, wobei das Klemmmittel (9) wenigstens ein elastisches Klemmelement (98) umfasst, welches sich in dem Zwischenraum befindet, wobei das elastische Klemmelement (98) dazu tendiert, wenigstens die eine der externen Seitenflächen (81) gegen die eine der Aufnahme-Seitenflächen (102, 106) zu drücken.

14. Paket zum Transport oder/und zur Zwischenlagerung von radioaktiven Materialien, beispielsweise nuklearen Brennelementen, umfassend eine Verpackung und einen Deckel, der die Verpackung schließt, wobei die Verpackung einen Behälter (1) nach einem der vorhergehenden Ansprüche aufnimmt.

15. Verfahren zum Aufbau eines Behälters (1) nach einem der Ansprüche 1 bis 12, umfassend, nach einem Schritt eines Aufnehmens des Endes der Wandung (80, 82, 84) in der Aufnahme (100), einen Schritt eines Drückens von wenigstens einer der Seitenflächen (81, 85) der Wandung gegen wenigstens eine der Aufnahme-Seitenflächen (102, 106), so dass die Wandung (80, 82, 84) sich zwischen dem Klemmmittel (9) und der Aufnahme-Seitenfläche (102, 106) befindet, gegen welche die Seitenfläche (81, 85) der Wandung gedrückt wird.

## Claims

1. A basket (1) for transport and/or storage packaging of radioactive materials such as nuclear fuel assemblies, the basket (1) comprising:
at least one internal partition (6, 8) comprising at least one wall (80, 82, 84) having two opposite lateral surfaces (81, 85), and
at least one peripheral partition (10),
the internal partition (6, 8) delimits at least partially on either side of the same two cells (2) intended to house the radioactive materials, the peripheral partition (10) participating with the internal partition (6, 8) in delimiting the cells (2),
the peripheral partition (10) comprising at least one housing (100) accommodating one end of the at least one wall (80, 82, 84), the housing (100) comprising two opposite lateral housing surfaces (102, 106) and a bottom (104) bringing together the two lateral housing surfaces (102, 106),
**characterised in that** the basket (1) comprises a tightening means (9) configured to press at least one of the lateral wall surfaces (81, 85) against at least one of the lateral housing surfaces (102, 106).

2. The basket (1) according to the preceding claim, wherein the internal partition (6, 8) comprises two parallel walls (82, 84) separated by a spacing, each of the walls (82, 84) having a lateral external surface (81) and a lateral internal surface (85), at least one of the lateral external surfaces (81) or at least one of the lateral internal surfaces (85) being configured to be pressed against one of the lateral housing surfaces (102, 106) by the tightening means (9).

3. The basket (1) according to any of the preceding claims, wherein the tightening means (9) generates a pinching strain of the wall end (80, 82, 84) of the internal partition (6, 8) between:
said lateral housing surface (102, 106) against which the wall (80, 82, 84) is pressed, called a first pinching surface, and
a second pinching surface facing the first pinching surface (102, 106),
wherein the end of the at least one wall (80, 82, 84) is preferably pinched in the housing (100), by being in mechanical contact with both lateral housing surfaces (102, 106).

4. The basket (1) according to any of the preceding claims, wherein the peripheral partition (10) comprises an internal surface (17) oriented inwardly of the basket (1) and participating in delimiting the cells (2), the housing (100) opening to the internal surface (17), such that at least one of the lateral housing surfaces (102, 106) is orthogonal to the internal surface (17).

5. The basket (1) according to any of the preceding claims, wherein a value ratio of a thickness (107) of at least one wall to a surface length (105) of wall lateral surface contact with one of the lateral housing surfaces, in a transverse cross-sectional plane of the basket (1), is between 0.2 and 1.

6. The basket (1) according to any of the preceding claims, wherein the internal partition (6, 8) is in mechanical contact with the peripheral partition (10) on at least % the height of the peripheral partition (10), preferably over substantially the entire height of the basket (1).

7. The basket (1) according to any of the preceding claims, comprising a plurality of internal partitions (6, 8) formed by stacked interlaced structural sets (6a, 8a).

8. The basket (1) according to any of the preceding claims, wherein the tightening means (9) comprises a plurality of tightening elements (90) spaced from each other along the height of the basket (1), and preferably each configured to exert a tightening force (F₁) the value of which is independent of that of the other tightening elements (90).

9. The basket (1) according to any of the preceding claims, wherein the tightening means (9) is configured to be tightened/untightened from outside the basket (1).

10. The basket (1) according to any of the preceding claims, wherein the tightening means (9) comprises a screw (92) and a nut (96) configured to cooperate with the screw (92).

11. The basket (1) according to the preceding claim, wherein the tightening means (9) comprises at least one jaw (94), the jaw (94) being separation biased by the nut (96) to press at least one of the lateral wall surfaces (81) against at least one of the lateral housing surfaces (102).

12. The basket (1) according to any of the preceding claims, wherein the tightening means (9) comprises at least one first tilted surface (97), the peripheral partition (10) or the wall end (80, 82, 84) comprising at least one second tilted surface (95) complementary to the first tilted surface (97) and configured to be supported on the first tilted surface (97).

13. The basket (1) according to any of claims 2 to 8 in that they depend on claim 2, wherein the tightening means (9) comprises at least one elastic tightening element (98) located in the spacing, the elastic tightening element (98) tending to press at least one of the lateral external surfaces (81) against one of the lateral housing surfaces (102, 106).

14. A transport and/or storage pack for radioactive materials such as nuclear fuel assemblies, comprising a packaging and a lid closing the packaging, the packaging housing a basket (1) according to any of the preceding claims.

15. A method for assembling a basket (1) according to any of claims 1 to 12, comprising, after a step of accommodating the end of the wall (80, 82, 84) in the housing (100), a step of pressing at least one of the lateral wall surfaces (81, 85) against at least one of the lateral housing surfaces (102, 106), such that the wall (80, 82, 84) is located between the tightening means (9) and the lateral housing surface (102, 106) against which the lateral wall surface (81, 85) is pressed.
